# EUROPÄISCHE PATENTSCHRIFT

(11) **EP 1 703 578 B1**
(45) Veröffentlichungstag und Bekanntmachung des Hinweises auf die Patenterteilung: **16.09.2009**
(21) Anmeldenummer: 05005761.1
(22) Anmeldetag: 16.03.2005
(51) Int. Cl.: H01M 8/04, H01M 8/06, H01M 8/24, F28F 13/00, H01L 23/473, F28F 3/00, F28F 3/02, F02N 17/04

(54) **Reformer-Brennstoffzellen-System mit externem Brenner**
Reformer-fuel cell system with external burner
système reformeur-pile à combustible avec un brûleur externe

(43) Veröffentlichungstag der Anmeldung: 20.09.2006
(73) Patentinhaber: Truma Gerätetechnik GmbH & Co., 85640 Putzbrunn (DE); INSTITUT FÜR MIKROTECHNIK MAINZ GmbH, 55129 Mainz (DE)
(72) Erfinder: Schiegl, Andreas, 82041 Oberhaching (DE); Frank, Reinhard, 80331 München (DE); Butschek, Sven, 81671 München (DE); Kolb, Gunther Dr., Carl-Zeiss-Strasse 18 - 20 55129 Mainz (DE)
(74) Vertreter: Müller - Hoffmann & Partner

(56) Entgegenhaltungen:
- EP-A- 1 081 779
- EP-A- 1 228 999
- EP-A- 1 376 726
- WO-A-20/04021496
- DE-A1- 10 315 225
- DE-A1- 10 324 213

## Beschreibung

Die Erfindung betrifft ein Reformer-Brennstoffzellen-System gemäß dem Oberbegriff von Patentanspruch 1 sowie ein Verfahren zum Starten und/oder Betreiben eines Reformer-Brennstoffzellen-Systems gemäß dem Oberbegriff von Patentanspruch 34.

Reformer-Brennstoffzellen-Systeme sind seit langem bekannt. Ein aus mehreren Reformerteilsystemen bestehender Reformer erzeugt aus einem Primärbrennstoff ein wasserstoffreiches Gas, das in einer Brennstoffzelle zum Erzeugen von elektrischem Strom verwendet wird. Als Reformerteilsysteme sind z.B. Reformereinrichtungen, Verdampfer, Wärmetauscher, Shiftstufen und Gasfeinreinigungsstufen bekannt.

Kleinere Reformer für Brennstoffzellen mit einer geringen elektrischen Leistung sind z.B. aus der DE-A-100 40 539, DE-A-100 32 059 oder DE-A-101 18. 618 bekannt.

Für die Inbetriebnahme und den Dauerbetrieb sowohl des Reformers als auch der Brennstoffzelle ist eine ausreichende Wärmeversorgung erforderlich. Insbesondere bei Reformer-Brennstoffzellen-Systemen mit kleiner Leistung besteht bei Betrieb im Teillastbetrieb die Gefahr, dass keine ausreichende Wärme zur Verfügung steht, was zu einer Verschlechterung oder gar zu einem Erliegen des Reformer-Prozesses einerseits und des Brennstoffzellen-Prozesses andererseits führen kann.

Zum Aufheizen einer Brennstoffzelleneinheit beim Kaltstart ist aus der DE-A-199 10 387 bekannt, eine zusätzliche Heizung vorzusehen, deren Betriebswärme zum Aufheizen eines Brennstoffzellenstapels genutzt wird. Die Heizung erwärmt ein Wärmetransportmedium, welches durch die Reaktionskammern des Brennstoffzellenstapels geleitet wird und diesen dabei aufheizt.

Aus der DE-A-199 31 061 ist eine Anordnung zum Beheizen und Kühlen eines Brennstoffzellensystems bekannt, in die neben einem Brenner und einem Kühler auch ein Reformer integriert sein kann. Ein Heiz- bzw. Kühlmedium, das in einem geschlossenen Kreislauf innerhalb des Systems zirkuliert, dient zur Regelung der internen Wärmeflüsse, speziell zur Erwärmung der zur Brennstoffzelle geführten gasförmigen Medienströme.

In der DE 103 15 225 A1 wird ein Reformer-Brennstoffzellen-System beschrieben, bei dem das Abgas von einem externen Brenner bzw. ein von dem externen Brenner erwärmtes Wärmeträgermedium dem Reformer oder der Brennstoffzelle zur Erwärmung zuführbar ist.

Aus der EP 1 228 999 A2 ist ein Gaserzeugungssystem für ein Brennstoffzellensystem bekannt, bei dem ein katalytischer Brenner einen Verdampfer und eine Teilreformierungseinheit mit Heißgas beheizt. Der katalytische Brenner ist mit dem Verdampfer gekoppelt.

In der DE 103 24 213 A1 wird eine Brennstoffzellenvorrichtung beschrieben, mit einem Wasserstoffbrenner, mit dem eine Brennstoffzelle und ein Kraftstoffreformer auf die erforderliche Betriebstemperatur gebracht werden können.

Der Erfindung liegt die Aufgabe zugrunde, ein Reformer-Brennstoffzellen-System anzugeben, bei dem eine besonders gezielte Aufheizung von Reformerteilsystemen und Brennstoffzelle bei gleichzeitig kompaktem Aufbau erreicht werden kann.

Die Aufgabe wird erfindungsgemäß durch ein Reformer-Brennstoffzellen-System gemäß Anspruch 1 sowie durch ein Verfahren gemäß Anspruch 31 gelöst. Vorteilhafte Weiterentwicklungen der Erfindung sind in den abhängigen Ansprüchen definiert.

Bei einem erfindungsgemäßen Reformer-Brennstoffzellen-System ist außerhalb des Reformers und der Brennstoffzelle eine Brennereinrichtung zum Erzeugen eines heißen Abgases angeordnet. Weiterhin ist eine Abgasführungseinrichtung vorgesehen, zum Führen des Abgases zu wenigstens zwei Komponenten, nämlich zu wenigstens einem Reformerteilsystem und zu der Brennstoffzelle. Der Reformer besteht üblicherweise aus mehreren Reformerteilsystemen, nämlich einer eigentlichen Reformereinrichtung, einem Verdampfer, einem oder mehreren Wärmetauschern, einer oder mehreren Shiftstufen und einer oder mehreren Gasfeinreinigungsstufen. Unter dem Begriff "Komponenten" sind nachfolgend diese Reformerteilsysteme sowie die eigentliche Brennstoffzelle zu verstehen.

Die Abgasführungseinrichtung bestimmt somit, dass wenigstens zwei der Komponenten durch das heiße Abgas angeströmt oder durchströmt werden. Dabei wird der Strömungsweg des Abgases durch die Abgasführungseinrichtung derart bestimmt, dass die Komponenten entsprechend ihres jeweiligen Betriebstemperatur-Niveaus in absinkender Temperaturreihenfolge angeströmt und/oder durchströmt werden. Das bedeutet, dass als erstes die Komponente mit dem höchsten Betriebstemperatur-Niveau von dem Abgas durchströmt wird. Danach strömt das Abgas in die Komponente mit der nächstniedrigeren Betriebstemperatur usw. Das Abgas kühlt sich auf seinem Strömungsweg immer mehr ab. Da es jedoch zielgerichtet geführt wird, kann es in jeder Komponente, durch die es strömt, Wärme abgeben, um in dieser Komponente die erforderliche Betriebstemperatur zu erreichen bzw. zu erhalten.

Dabei ist es möglich, dass das Abgas entweder direkt in die jeweilige Komponente selbst einströmt oder aber auch nur außen an der Komponente vorbeiströmt. Je nach Anwendungsfall bzw. erforderlicher Wärmeübertragung kann die Abgasführungseinrichtung ausgestaltet werden, um in der jeweiligen Komponente einen ausreichenden Wärmeübergang vom Abgas in den Reaktionsraum der Komponente sicherzustellen.

Bei einer vorteilhaften Ausführungsform der Erfindung ist die Abgasführungseinrichtung derart ausgestaltet, dass die Komponenten durch das Abgas von auβen anströmbar sind und die Wärme des Abgases von außen über Wände in Reaktionsräume der Komponenten übertragen wird. Das Abgas muss somit nicht in das Innere der Reaktionsräume gelangen. Vielmehr reicht es z.B. aus, dass das Abgas an einer Wand eines betreffenden Reaktionsraums in einer Komponente außen entlangströmt, sodass sich die Wand erwärmt.

Es ist vorteilhaft wenn die Abgasführungseinrichtung Kanäle zum Führen des Abgases aufweist. Dies erleichtert eine ziel- und zweckgerichtete Führung des heißen Abgases.

Bei einer anderen Ausführungsform der Erfindung sind die Kanäle in den Reaktionsräumen der Komponenten angeordnet. Hier wird folglich das Abgas in das Innere der Reaktionsräume, an die Innenwände der Reaktionsräume bzw. durch die Reaktionsräume geführt. Verständlicherweise darf das Abgas dabei nicht in die Reaktionsräume selbst gelangen und sich dort mit den Medienströmen vermischen. Vielmehr wird die Wärme des Abgases über die Wandungen der Kanäle in die Reaktionsräume abgegeben. Die Kanäle stellen dementsprechend auch sicher, dass das Abgas die Reaktionsräume wieder verlässt.

Entsprechend dem Wärmebedarf einer jeweiligen Komponente ist die für den Wärmeübergang vom Abgas in die Komponente wirksame Oberfläche der dieser Komponente zugeordneten Kanäle angepasst, also z.B. die Länge, Anzahl, Querschnittsform und/oder Querschnittsabmessungen der Kanäle. Der Wärmebedarf bestimmt sich durch die zum Erreichen der Betriebstemperatur in der betreffenden Komponente erforderlichen Wärme. Aufgrund der Dimensionierung der Brennereinrichtung ist die Wärmemenge in dem die Brennereinrichtung bzw. die einzelnen Komponenten verlassenden Gas bekannt. Durch entsprechende Ausgestaltung der Kanäle kann nun gezielt in jeder Komponente genau die Wärmemenge abgegeben werden, die zum Beheizen der Komponente beim Starten des Systems bzw. zur Aufrechterhaltung der Betriebstemperatur im Volllast- oder Teillastbetrieb erforderlich ist. So kann z.B. die Länge der den jeweiligen Reaktionsraum durchdringenden bzw. an einem Reaktionsraum vorbeigeführten Kanäle angepasst werden. Je größer die Kanallänge bzw. Anzahl der Kanäle ist, die einem Reaktionsraum zugeordnet ist, desto größer wird die Wärmemenge sein, die von dem Abgas an den Reaktionsraum abgegeben werden kann. Entsprechendes gilt für die Querschnittsform: Je kleiner der Querschnitt eines Kanals ist, desto mehr Kanäle müssen vorgesehen werden, um das Abgas zuverlässig strömen zu lassen. Dementsprechend wird auch die wirksame Oberfläche (Außenfläche der Kanäle) vergrößert und mehr Wärme abgegeben. Eine geringere Kanalanzahl bei gleichzeitig größerem Querschnitt hingegen gewährleistet, dass über die dann kleinere Oberfläche verhältnismäßig wenig Wärme abgegeben werden kann. Diese Wärme kann dadurch z.B. gut auf nachfolgende Komponenten verteilt werden.

Bei einer vorteilhaften Ausführungsform der Erfindung sind Heizkanäle in den Komponenten vorgesehen, die gleichermaßen durch das von der Abgasführungseinrichtung zugeführte Abgas und durch ein beim Betrieb des Systems in den Komponenten selbst erzeugtes heißes Gas nutzbar sind. Im Betriebszustand werden in den Komponenten heiße (Gas-) Medienströme erzeugt, z.B. schließlich das Reformatgas selbst. Dieses heiße Gas kann nach Verlassen einer jeweiligen Komponente zunächst durch die Heizkanäle einer weiteren Komponente zugeführt werden, um diese zu beheizen. Erst dann gelangt das Gas zu seinem eigentlichen Zielort, wo es entweder weiter verarbeitet oder - in der Brennstoffzelle selbst - zur Erzeugung von elektrischem Strom verbraucht wird.

Die Heizkanäle können dementsprechend entweder ausschließlich als Kanäle für die Abgasführungseinrichtung, ausschließlich als Kanäle für das von den Komponenten selbst erzeugte heiße Gas oder auch für das Abgas und das Heizgas gleichzeitig genutzt werden. Bei gleichzeitiger Nutzung muss allerdings sichergestellt werde, dass das Abgas nicht in die Reaktionsräume des Reformers oder der Brennstoffzelle gelangen kann.

Vorzugsweise ermöglicht die Abgasführungseinrichtung eine serielle und/oder eine parallele Durchströmung der Komponenten. Je nach Temperaturführung kann dementsprechend das Abgas mehrere Komponenten nacheinander durchströmen oder auch mehrere Komponenten gleichzeitig.

Bei einer anderen Ausführungsform der Erfindung ist die Abgasführungseinrichtung stromab von der Brennereinrichtung und stromauf von den Komponenten in einen ersten Führungsabschnitt und einen zweiten Führungsabschnitt geteilt, wobei der Strom des Abgases auf die beiden Führungsabschnitte aufgeteilt ist. Die Führungsabschnitte ermöglichen somit, dass der Abgasstrom hinter der Brennereinrichtung aufgeteilt und gezielt zu der jeweiligen Komponente geführt werden kann.

Dabei ist es besonders vorteilhaft, wenn durch den ersten Führungsabschnitt Abgas zu wenigstens einem der Reformer-Teilsysteme führbar ist, während durch den zweiten Führungsabschnitt Abgas zu der Brennstoffzelle geführt wird. Das bedeutet, dass das Abgas direkt von der Brennereinrichtung zu der Brennstoffzelle geführt werden kann.

Bei einer besonders vorteilhaften Ausführungsform ist wenigstens einer der Komponenten Zusatzluft zuführbar. Die Zusatzluft ermöglicht einen gezielte Kühlung des Abgases, um für die betreffende Komponente die gewünschte Temperatur zu erreichen.

Besonders vorteilhaft ist es, wenn die Zusatzluft dem Abgas in dem zweiten Führungsabschnitt beimischbar ist. Da das Abgas in dem zweiten Führungsabschnitt direkt von der Brennereinrichtung kommt, weist es eine hohe Temperatur auf, die für die Brennstoffzelle zu hoch sein kann. Mit Hilfe der gezielten Kühlung durch Beimischen der Zusatzluft kann das Abgas auf eine für die Brennstoffzelle geeignete Temperatur herabgekühlt werden.

Bei einer anderen Ausführungsform der Erfindung ist das durch den zweiten Führungsabschnitt strömende Abgas zu einem Wärmetauscher führbar, mit dem Zusatzluft erwärmbar ist, die anschließend der Brennstoffzelle zugeführt wird. Auf diese Weise muss das Abgas selbst nicht bis zur Brennstoffzelle geführt werden. Vielmehr wird allein die Wärme des Abgases auf die Zusatzluft und von der Zusatzluft auf die Brennstoffzelle übertragen.

Besonders vorteilhaft ist es, wenn die Zusatzluft von der Primärluft abzweigbar ist, die der Brennereinrichtung zugeführt wird. Die Brennereinrichtung benötigt ohnehin Primärluft (Verbrennungsluft), die zum Verbrennen des Brennstoffs durch die Brennereinrichtung dient. Von ihr kann in einfacher Weise ein Luftstrom als Zusatzluft abgezweigt und dem zweiten Führungsabschnitt zugeführt werden.

Vorteilhafterweise ist die Zusatzluft von einer Zusatzluft-Fördereinrichtung zwangsweise förderbar. Dadurch wird gewährleistet, dass die Zusatzluft in der gewünschten Menge ihrem Ziel zugeführt wird. Als Zusatzluft-Fördereinrichtung ist vor allem ein schaltbares Gebläse geeignet.

Besonders vorteilhaft ist es, wenn die Zusatzluft-Fördereinrichtung unabhängig von einem Betriebszustand der Brennereinrichtung aktivierbar ist. In diesem Fall kann die Zusatzluft-Fördereinrichtung auch dann Zusatzluft fördern, wenn die Brennereinrichtung abgeschaltet ist. So kann die Zusatzluft z.B. im Betrieb zur Kühlung der Brennstoffzelle genutzt werden, auch wenn die Brennereinrichtung selbst nicht mehr betrieben wird.

Bei einer besonders vorteilhaften Ausführungsform der Erfindung sind diejenigen Komponenten benachbart zueinander angeordnet, die eine möglichst ähnliche Betriebstemperatur erfordern. Auf diese Weise ist es möglich, Isolationsmaßnahme zwischen den Komponenten gering zu halten. Weiterhin kann der Abgasstrom in einfacher Weise von einer Komponente zur nächsten Komponente geführt werden.

Besonders vorteilhaft ist es, wenn die Komponenten in Abhängigkeit von ihrer jeweiligen Betriebstemperatur nebeneinander und/oder nacheinander mit absinkender Temperatur-Reihenfolge angeordnet sind. Dann ist es möglich, dass das Abgas in einfacher Weise von einer zur nächsten Komponente geführt werden kann.

Als Reformer im Sinne der Erfindung ist jede Art von Einrichtung zum Erzeugen eines wasserstoffreichen Gases aus einem Primärbrennstoff anzusehen. Dazu gehören Reformer (Reformereinrichtungen) im eigentlichen Sinne, aber auch Crackreaktoren, die ebenfalls in bekannter Weise zur Erzeugung des Gases genutzt werden können. Der Begriff "Reformer" ist daher in diesem Text weiter zu definieren als dies im eigentlichen technischen Sinne üblich ist; dies erscheint aber zweckmäßig, um eine sprachliche Überfrachtung des Textes durch ständige Doppelnennung von Reformern und Crackreaktoren zu vermeiden.

Als Brennstoffzelle eignen sich Niedertemperatur-Polymerelektrolytmembran-Brennstoffzellen oder Hochtemperatur-Polymerelektrolytmembran-Brennstoffzellen. Der Aufbau dieser Brennstoffzellen ist bekannt. Als Brennstoffzelle kann im Sinne der Erfindung eine einzelne Brennstoffzelle, aber auch ein Stapel (stack) oder mehrere Stapel von Brennstoffzellen verstanden werden. Es ist selbstverständlich bekannt, dass ein Reformer-Brennstoffzellen-System üblicherweise mehrere in Reihe geschaltete Brennstoff-Einzelzellen benötigt, um eine nutzbare elektrische Spannung zu erhalten.

Vorzugsweise ist zwischen benachbarten Komponenten eine Wärmeisolierung vorgesehen. Die Wärmeisolierung gestattet es, dass die in den einzelnen Komponenten erforderlichen Betriebstemperaturen sehr präzise eingehalten werden können, um den Wirkungsgrad des Systems auf optimalem Niveau zu halten und eine Beschädigung der Komponenten zu vermeiden.

Wenigstens einige der Komponenten können eine bauliche Einheit bilden. Alternativ dazu ist es möglich, dass auch einige zueinander benachbarte Komponenten räumlich getrennt voneinander angeordnet sind, also vorzugsweise einen Abstand zueinander aufweisen.

Besonders vorteilhaft ist es, wenn die Brennereinrichtung mit dem gleichen Primärbrennstoff betreibbar ist, der auch zum Erzeugen des wasserstoffreichen Gases verwendet wird. Auf diese Weise genügt es, für das gesamte Reformer-Brennstoffzellen-System einen einheitlichen Brennstoff zur Verfügung zu stellen.

Bei einer besonders vorteilhaften Ausführungsform der Erfindung ist der Brennereinrichtung Primärluft (Verbrennungsluft) zum Verbrennen des Primärbrennstoffs und Erzeugen des Abgases zuführbar, während dem Abgas Sekundärluft zuführbar ist. Die Sekundärluft wird dementsprechend stromab von der Brennereinrichtung zugeführt, um das Abgas abzukühlen (siehe auch oben: "Zusatzluft"). Auf diese Weise kann ein Überhitzen der in Strömungsrichtung gesehen ersten Komponenten vermieden werden.

Vorzugsweise ist die Sekundärluft durch eine Sekundärluft-Förderungseinrichtung zwangsweise förderbar, die auch durch eine außerdem die Primärluft fördernde Luft-Förderungseinrichtung (Luftversorgungseinrichtung) der Brennereinrichtung gebildet werden kann.

Durch Beimischen der Sekundärluft ist es möglich, unterschiedliche Luftstöchiometrien zu erreichen, deren Luftzahl λ von dem stöchiometrisch ausgeglichenen Wert 1,0 abweicht. Je mehr Sekundärluft beigefügt wird, desto höher ist die Luftzahl λ.

Die Brennereinrichtung sollte mit Luftstöchiometrien mit einer Luftzahl λ im Bereich von 1,0 bis 4,0, vorzugsweise von 1,2 bis 3,0 betrieben werden. Dabei ist es anzustreben, dass die Luftstöchiometrien der Brennereinrichtung in Abhängigkeit von der Betriebstemperatur von derjenigen Komponente festgelegt ist, die den höchsten Betriebstemperaturwert aufweist. Damit ist es sichergestellt, das die Komponente, die den höchsten Wärmebedarf beim Starten und im Betrieb hat, von der Brennereinrichtung mit ausreichend Wärme versorgt wird. Die nachfolgenden Komponenten können dann bei entsprechender Gestaltung der Abgasführungseinrichtung bzw. der zu dieser gehörenden Kanäle in der oben beschriebenen Weise mit Wärme versorgt werden.

Besonders vorteilhaft ist es, wenn eine Luftversorgungseinrichtung zum Zuführen von Verbrennungsluft zu der Brennereinrichtung vorgesehen ist und die Luftversorgungseinrichtung außerdem auch zum Fördern des Abgases durch die Abgasführungseinrichtiung dient. Die Luftversorgungseinrichtung erzeugt auf diese Weise die erforderliche Druckdifferenz in der Abgasführungseinrichtung, die ein zuverlässiges Durch- und Abströmen des Abgases gewährleistet.

Weiterhin vorteilhaft ist es, wenn die Brennereinrichtung Bestandteil einer Heizungseinrichtung zum Erzeugen von Wärme für einen Nutzraum, insbesondere einem Nutzraum in einer mobilen Einrichtung wie einem Reisemobil, einem Caravan, einem Nutzfahrzeug oder einem Boot ist. Die Heizungseinrichtung, z.B. eine Standheizung oder eine Gasheizung in einem Reisemobil, ist ohnehin vorhanden, um den Nutzraum für den Bewohner auf einem angenehmen Temperaturniveau zu halten. Das Abgas von der Brennereinrichtung kann dann nach Verlassen des Reformerbrennstoffzellensystems, also nach Aufheizen der Komponenten, auch zum Beheizen des Nutzraums verwendet werden, wenn dies gewünscht ist. Alternativ kann das Abgas selbstverständlich auch direkt über einen Kamin an die Umgebung abgegeben werden.

Vorzugsweise ist für diesen Zweck dem Reformer-Brennstoffzellen-System im Abgasstrom ein Wärmetauscher nachgeschaltet, über den durch das Abgas die Luft für den Nutzraum erwärmt werden kann. Dieser Wärmetauscher ist ebenfalls Bestandteil der Heizungseinrichtung und dementsprechend oft schon in der mobilen Einrichtung vorhanden.

Schließlich wird erfindungsgemäß ein Verfahren zum Starten und/oder Betreiben eines Reformer-Brennstoffzellen-Systems angegeben. Dabei wird - wie oben dargelegt - das Abgas zu wenigstens zwei Komponenten, nämlich zu wenigstens einem der Reformerteilsysteme und/oder zu der Brennstoffzelle geführt. Das Abgas durchströmt die betreffenden Komponenten entsprechend ihres jeweiligen Temperaturniveaus in absinkender Reihenfolge.

Diese und weitere Vorteile und Merkmale der Erfindung werden nachfolgend anhand von Beispielen unter Zuhilfenahme der begleitenden Figuren näher erläutert. Es zeigen:
- **Figur 1**: den schematischen Aufbau eines erfindungsgemäßen Reformer-Brennstoffzellen-Systems;
- **Figur 2**: eine andere Ausführungsform des erfindungsgemäßen Reformer-Brennstoffzellen-Systems;
- **Figur 3**: schematisch eine Realisierung des Systems von Figur 2; und
- **Figur 4**: schematisch eine weitere Ausführungsform der Erfindung.

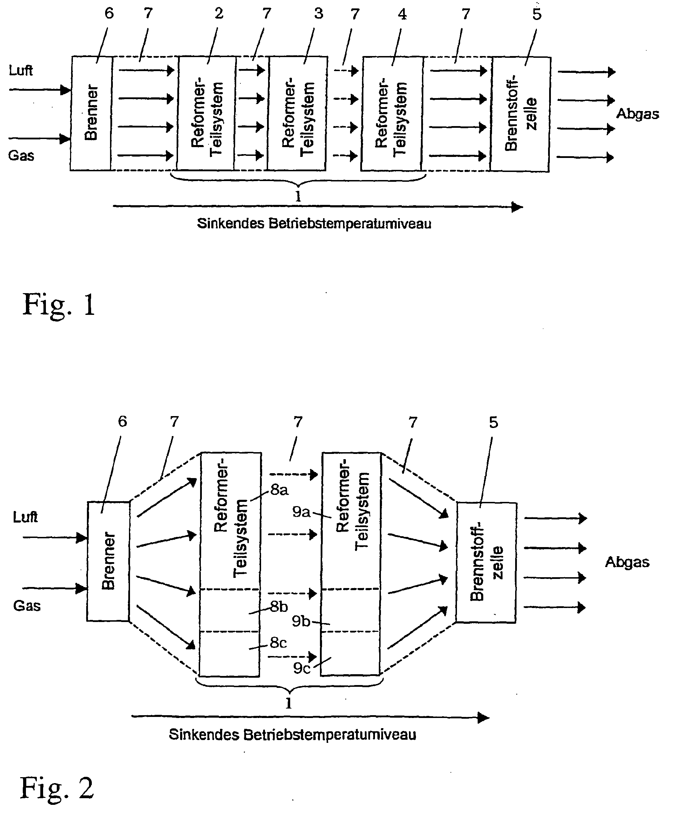

Fig. 1 zeigt schematisch den Aufbau eines erfindungsgemäßen Reformer-Brennstoffzellen-Systems.

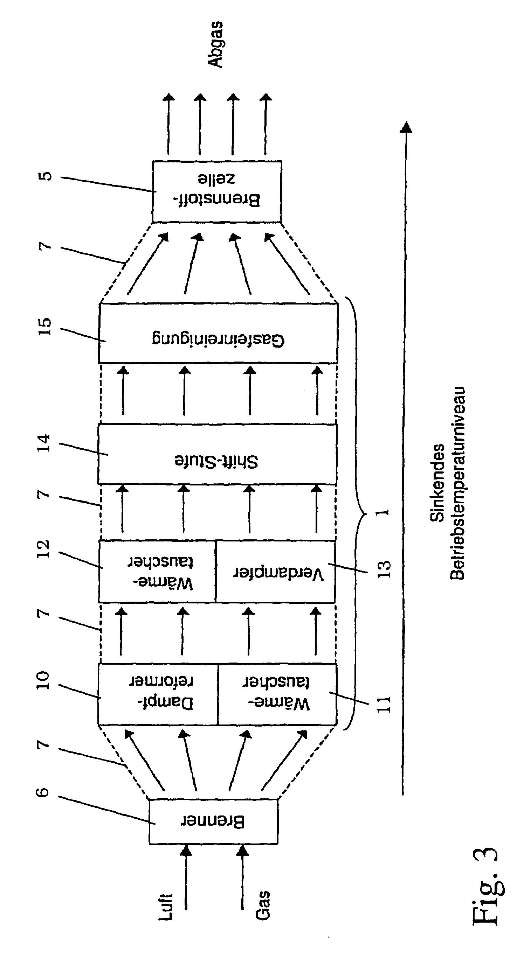

Ein Reformer 1 dient zum Erzeugen eines wasserstoffreichen Gases aus einem Primärbrennstoff. Der Reformer 1 besteht in bekannter Weise aus mehreren Reformer-Teilsystemen 2, 3, 4. Dazu gehören z.B. die eigentliche Reformereinrichtung (z.B. Dampfreformer, Vorrichtung zur partiellen Oxidation, Crackreaktor, autotherme Reformierung), Verdampfer, Shiftstufen, Gasfeinreinigungsstufen und Wärmetauscher. Ein Beispiel für einen typischen Reformer 1 wird später anhand von Fig. 3 näher erläutert.

Dem Reformer 1 ist eine Brennstoffzelle 5 nachgeschaltet. Wie oben bereits ausgeführt, wird der Begriff Brennstoffzelle allgemein für eine einzelne Brennstoffzelle, aber auch für einen Brennstoffzellenstapel (stack) oder mehrere Stapel von Brennstoffzellen verwendet. Der prinzipielle Aufbau und die Funktionsweise der Brennstoffzelle 5 ist bekannt, sodass sich eine nähere Beschreibung erübrigt. Im Prinzip erzeugt die Brennstoffzelle 5 einen elektrischen Strom unter Nutzung des wasserstoffreichen Gases, dass ihr von dem Reformer 1 zugeführt wird.

Die bei Reformer-Brennstoffzellen-Systemen üblichen (Gas-)Medienströme, insbesondere die Ströme von Primärbrennstoff- und Reformatgas, Wasser, Reaktionsluft, sind in Fig. 1 nicht dargestellt, da sie die Erfindung nicht betreffen.

Vielmehr ist gemäß der Erfindung ein Brenner 6 vorgesehen, dem Luft und Gas, insbesondere auch der Primärbrennstoff, zugeführt wird und der ein heißes Abgas erzeugt. Das heiße Abgas wird über einen als Abgasführungseinrichtung dienenden Abgas-Strömungskanal 7 dem Reformer 1 zugeleitet.

Der Brenner 6 ist extern von dem Reformer 1 und der Brennstoffzelle 5 vorgesehen. Er unterscheidet sich somit von möglichen weiteren internen Brennern, die in einzelnen Komponenten in bekannter Weise angeordnet sein können.

Dabei sind in dem Reformer 1 die verschiedenen Reformer-Teilsysteme 2, 3, 4 in einer Reihenfolge nacheinander angeordnet, die dem Temperaturgradienten ihrer jeweiligen Betriebstemperatur entsprechen. Das bedeutet, dass das heiße Abgas über den Abgas-Strömungskanal 7 zunächst in das Reformer-Teilsystem 2 gelangt, das die höchste Betriebstemperatur benötigt. Dort gibt das Abgas einen Teil seiner Wärmeenergie ab, sodass ein Reaktionsraum in dem Reformer-Teilsystem 2 auf die erforderliche Betriebstemperatur gebracht werden kann. Idealerweise verlässt das Abgas das Reformer-Teilsystem 2 mit einer Temperatur, die der Betriebstemperatur des Reformer-Teilsystems 2 entspricht.

Danach gelangt das Abgas weiter über den Abgas-Strömungskanal 7 in das nächste Reformer-Teilsystem 3, welches mit einer niedrigeren Betriebstemperatur arbeitet. Auch wenn sich das Abgas zwar inzwischen etwas abgekühlt hat, ist das System derart konzipiert, dass das Abgas immer noch genug Wärme aufweist, um auch das Reformer-Teilsystem 3 ausreichend zu versorgen. In ähnlicher Weise werden nacheinander auch die anderen Reformer-Teilsysteme in der absteigenden Reihenfolge ihrer Betriebstemperaturen durchströmt. Danach kann das Abgas über den Abgas-Strömungskanal 7 auch noch der Brennstoffzelle 5 zugeführt werden, wo weitere Wärme abgegeben wird.

Dabei sollte im Lauf der Zeit die Temperatur des das jeweilige Reformer-Teilsystem verlassenden Abgases zum Zeitpunkt des Austritts aus dem Reformer-Teilsystems der Betriebstemperatur des betreffenden Reformer-Teilsystems entsprechen.

Selbstverständlich steht es dem Fachmann frei, entweder sämtliche Komponenten (Reformer-Teilsysteme 2, 3, 4, Brennstoffzelle 5) des Systems von dem Abgas durchströmen zu lassen, oder nur einige der Komponenten auszuwählen. So ist es durchaus möglich, dass einige Komponenten in dem System keine zusätzliche Wärme von außen benötigen, sei es, dass sie wärmeunempfindlich arbeiten oder dass die bei ihnen entstehende Reaktionswärme stets ausreicht, die erforderliche Betriebstemperatur einzuhalten.

Fig. 2 zeigt eine andere Ausführungsform des erfindungsgemäßen Reformer-Brennstoffzellen-Systems mit einer kombinierten Reihen- und Parallelschaltung von mehreren Reformer-Teilsystemen.

Das Abgas von dem Brenner 6 wird über den Abgas-Strömungskanal 7 an den Reformer 1 geliefert. In diesem sind mehrere Reformer-Teilsysteme, nämlich mit Bezugszeichen 8a, 8b und 8c parallel angeordnet, sodass sie gleichzeitig durch das Abgas durchströmt werden. Den Reformerteilsystemen 8a bis 8c sind weitere Reformer-Teilsysteme 9a, 9b und 9c nachgeschaltet, sodass zwischen 8a und 9a, 8b und 9b sowie 8c und 9c eine Reihenschaltung (serielle Durchströmung) realisiert ist. Selbstverständlich können die Abgasströme auch anders geführt werden, z.B. von Reformer-Teilsystem 8a zu dem Reformer-Teilsystem 9c oder zu den Reformer-Teilsystemen 9a und 9b. Ebenfalls ist es möglich, dass sich die Abgasströme wieder mischen, nachdem sie zunächst getrennt einzelne Komponenten durchströmt haben. Die Reformer-Teilsysteme 9a bis 9c werden dann wieder parallel durchströmt. Erst danach wird das Abgas in dem Abgas-Strömungskanal 7 wieder zusammengefasst und der Brennstoffzelle 5 zugeführt. Nach Verlassen der Brennstoffzelle 5 kann das Abgas zum Beheizen eines Nutzraums noch weiter verwendet werden oder über einen Kamin an die Umgebung abgegeben werden.

Der Begriff des Abgas-Strömungskanals 7 ist stellvertretend gewählt für eine Vielzahl von Einzelkanälen, die je nach Anforderung in den Komponenten und auch zwischen den Komponenten vorgesehen sein können. Hier liegt es im Ermessen des Fachmanns, die Kanäle hinsichtlich ihrer Anzahl, Länge, Form und Querschnittsabmessung so zu dimensionieren, dass jeweils die gewünschte Wärmemenge vom Abgas über die Außen-Oberfläche des Kanals an die Umgebung des Kanals, also insbesondere die jeweilige Komponente abgegeben wird. Die Kanäle können außen entlang der Komponenten geführt werden, sodass die Wärme des Abgases über die Außenwände der Komponenten in das Innere gelangen muss, um im jeweiligen Reaktionsraum zu wirken.

Alternativ dazu können die das Abgas führende Kanäle auch in die Reaktionsräume selbst bzw. so nah wie möglich an die Reaktionsräume (Innenwände) geführt werden, um den Wärmeübergang vom Abgas in den Reaktionsraum zu erleichtern.

Fig. 3 zeigt schematisch eine konkrete Realisierung des in Fig. 2 bereits grob beschriebenen Systems.

Demnach wird das Abgas von dem Brenner 6 über den Abgas-Strömungskanal 7 (selbstverständlich sind hier mehrere Kanäle vorzusehen) parallel einem Dampfreformer 10 und einem Wärmetauscher 11 zugeführt. Danach wird das Abgas aus dem Dampfreformer 10 in einen Wärmetauscher 12, und das Abgas aus dem Wärmetauscher 11 in einen Verdampfer 13 geleitet. Diesen nachgeschaltet ist eine Shiftstufe 14, der wiederum eine Gasfeinreinigungsstufe 15 folgt. Danach gelangt das Abgas in die Brennstoffzelle 5.

Wie oben dargelegt, werden die verschiedenen Komponenten in Abhängigkeit von ihren Temperaturen in abfallender Reihenfolge durchströmt. So weisen der Dampfreformer 10 und der Wärmetauscher 11 für die Feedgas-/Dampferwärmung eine Betriebstemperatur von 650 bis 750 °C auf. Der nachgeschaltete Wärmetauscher 12 für die Reformatkühlung sowie der Verdampfer 13 arbeiten mit Temperaturen von 400 bis 500 °C. Dem gegenüber liegt die Betriebstemperatur der wiederum nachgeschalteten Shiftstufe 14 bei 300 bis 350 °C. Die Gasfeinreinigung (Bezugszeichen 15) erfolgt hingegen nur mit 180 bis 250 °C. Die Brennstoffzelle schließlich wird in einem Temperaturbereich von 50 bis 90 °C betrieben.

Die Temperaturniveaus können je nach Art und Ausgestaltung des Reformersystems sowie der Art des zu reformierenden Brennstoffs variieren.

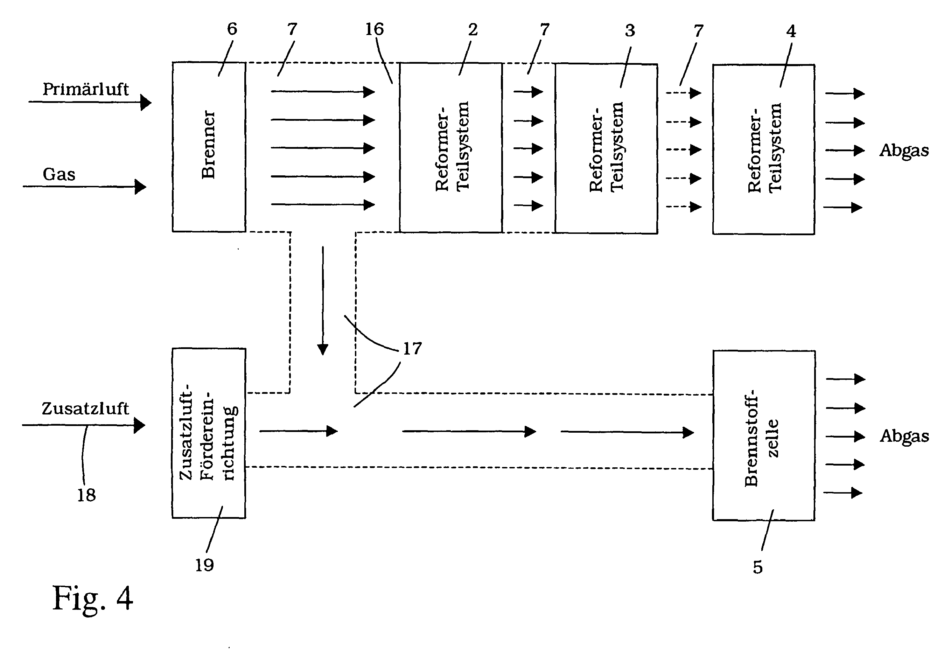

Fig. 4 zeigt eine weitere Ausführungsform der Erfindung. Zur Vereinfachung werden gleiche Komponenten und Bauelemente, die bereits oben z.B. unter Bezugnahme auf Fig. 1 erläutert wurden, in Fig. 4 genauso bezeichnet.

In Abwandlung zu der Ausführung von Fig. 1 weist bei Fig. 4 die Abgasführungseinrichtung 7 einen ersten Führungsabschnitt 16 und einen zweiten Führungsabschnitt 17 auf. Dadurch wird das Abgas von dem Brenner 6 in zwei Ströme aufgeteilt.

Das durch den ersten Führungsabschnitt 16 geführte Abgas wird zu den Reformer-Teilsystemen 2, 3, 4 geleitet. Das Abgas in dem zweiten Führungsabschnitt 17 hingegen wird direkt zu der Brennstoffzelle 5 geführt. Auf diese Weise ist ein direktes Beheizen der Brennstoffzelle 5 möglich.

Ergänzend wird dem Abgas in dem zweiten Führungsabschnitt 17 Zusatzluft 18 zugeführt, um die Temperatur des Abgases in dem zweiten Führungsabschnitt 17 zu senken und dadurch ein zu starkes Aufheizen der Brennstoffzelle 5 zu vermeiden.

Zur Unterstützung des Zusatzluftstroms ist ein als Zusatzluft-Fördereinrichtung dienendes Gebläse 19 vorgesehen.

Die Zusatzluft 18 kann vor dem Brenner 6 von der dem Brenner 6 zugeführten Primärluft abgezweigt werden.

Das Gebläse 19 lässt sich auch dann betreiben, wenn der Brenner 6 abgeschaltet ist. In diesem Fall fördert das Gebläse 19 Zusatzluft 18 zu der Brennstoffzelle 5, um die Brennstoffzelle 5 im Betrieb zu kühlen.

Bei einer nicht dargestellten Variante von Fig. 4 wird auch einzelnen Reformer-Teilsystemen Zusatzluft zugeführt, um ihre Temperatur auf den gewünschten Betriebstemperaturwert einzustellen.

Die Vorteile der erfindungsgemäßen Anordnung bestehen in einem kompakten Aufbau, einer gezielten direkten Aufheizung von Reformer-Teilsystemen und Brennstoffzelle auf ihre jeweiligen Betriebstemperatur-Niveaus, einem Verzicht auf zusätzliche Wärmetauscher bzw. Wärmetransportmedien, einem Schutz vor Überhitzung von temperaturkritischen Teilsystemen wie Brennstoffzelle und Gasreinigungsstufen sowie einer vereinfachten Regelung des Aufheizvorgangs.

Prinzipiell eignet sich das erfindungsgemäße System nicht nur zum Start des Systems, sondern auch zur Bereitstellung von Wärmeenergie im Betrieb mit verminderter Leistung (Teillastbetrieb), wenn die interne Abwärme von Reformersystem 1 und Brennstoffzelle 5 nicht ausreicht, um das System auf den erforderlichen Betriebstemperatur-Niveaus zu halten. Im Normalbetrieb bei voller Leistung erfolgt die Wärmebereitstellung hingegen üblicherweise durch nicht dargestellte integrierte Brenner in den einzelnen Reformer-Teilsystemen (z.B. im Dampfreformer 10 und im Verdampfer 13). Der Brenner 6 kann dann abgeschaltet werden. Selbstverständlich kann das erfindungsgemäße System auch im Volllastbetrieb benutzt werden. Ebenso kann die beim Betrieb entstehende Reaktionswärme in den Reformer-Teilsystemen und der Brennstoffzelle 5 zur Wärmeversorgung genutzt werden. Zusätzlich können auch hier externe Brenner zugeschaltet sein.

Bei der in dem Reformer 1 verwendeten Reformereinrichtung kann es sich um eine autotherme Reformereinrichtung, einen Dampfreformer, eine Vorrichtung zur partiellen Oxidation oder um einen Crackreaktor handeln. Als bevorzugte Ausführungsform wird ein Dampfreformer angesehen. Bei der nachfolgenden Gasaufbereitung können Hoch- und Niedertemperaturshift, selektive Oxidation oder Methanisierung Verwendung finden. Die Reformer-Teilsysteme können prinzipiell jede geometrische Form aufweisen, wobei als bevorzugte Ausführungsform der Aufbau als Plattenreaktoren gilt, da sich hier besonders leicht Heizkanäle (für den Abgas-Strömungskanal 7) z.B. als Kreuzstrom-Wärmetauscherkanäle in die einzelnen Komponenten integrieren lassen. Als Brennstoffzellentypen sind Niedertemperatur- und Hochtemperatur-Polymerelektrolytmembran-Brennstoffzellen gleichermaßen geeignet.

Als externer Brenner 6 kann prinzipiell jede beliebige Brennerausführung zum Einsatz kommen. Bevorzugt wird ein Flächenbrenner mit niedriger Flammhöhe, z.B. ein Brenner mit keramischer oder metallischer Oberfläche bzw. einer Oberfläche aus Faserwerkstoffen, wie z.B. eine mit Siliziumkarbid beschichtete Keramik-Fasermatte.

Prinzipiell kann das erfindungsgemäße Reformer-Brennstoffzellen-System als eine Einheit oder als räumlich getrennte Anordnung separater Einzelsystem ausgebildet werden. Für die meisten Anwendungsfälle werden jedoch diejenigen Einzelsysteme (Komponenten) zu Teilsystem zusammengefasst, die identische oder sehr ähnliche Betriebstemperatur-Niveaus aufweisen.

Bei Verwendung von Hochtemperatur-Polymerelektrolytmembran-Brennstoffzellen, die eine wesentlich höhere CO-Verträglichkeit als Niedertemperatur-Polymerelektrolytmembran-Brennstoffzellen aufweisen, kann die Gasfeinreinigungsstufe 15 (Fig. 3) entfallen und an ihre Stelle die Brennstoffzelle mit einem Betriebstemperatur-Niveau zwischen Umgebungstemperatur und 250 °C, vorzugsweise zwischen 140 und 200 °C, treten.

Die einzelnen Kanäle des Abgas-Strömungskanals 7 für die Durchführung der heißen Brennerabgase in den Reformer-Teilsystemen sowie in der Brennstoffzelle können beliebige Geometrien aufweisen. Bevorzugt werden aus Fertigungsgründen (Ätz- oder Prägetechnik; Laser; Erodieren) Längskanäle, also gerade verlaufende Kanäle mit weitgehend rechteckigem Querschnitt. Die Lage der Abgas-Strömungskanäle 7 zu den nicht dargestellten Kanälen mit den Reaktanden (eigentliche Medienströme) kann beliebig sein. Bevorzugte Anordnungsform sind Kreuzkanäle, bei der sich die Abgas-Strömungskanäle 7 und die weiteren Medienkanäle kreuzen. Ihre Anzahl und Anordnung in den einzelnen Komponenten richtet sich nach den erforderlichen Betriebstemperatur-Niveaus, der Geometrie der Abgas-Strömungskanäle, der Masse der einzelnen Komponenten, die aufgeheizt werden müssen, sowie der Güte der Wärmeübertragung. Zweckmäßigerweise werden die Abgaskanäle derart ausgelegt, dass eine Maximierung der Wärmeübertragung und eine Minimierung des Druckabfalls im Abgasstrom erreicht werden kann.

Zwischen den einzelnen Stufen des Reformer-Brennstoffzellen-Systems kann eine thermische Isolierung gegen unerwünschte Wärmeübertragung durch Isolierwerkstoffe und/oder durch entsprechende Beabstandung zwischen den Komponenten realisiert werden. Bevorzugte räumliche Abstände zwischen den Stufen, die mit unterschiedlichen Betriebstemperatur-Niveaus arbeiten, liegen bei einer räumlich getrennten Anordnung zwischen 5 und 100 mm; besonders bevorzugt sind Abstände zwischen 10 und 40 mm.

Zweckmäßigerweise empfiehlt sich für das komplette Reformer-Brennstoffzellen-System zur Minimierung der Wärmeverluste nach außen und zur Abdichtung der Abgas-Strömungsführung eine Einhausung mit Isoliermaterial und einem gasdichten Gehäuse.

Das erfindungsgemäße Reformer-Brennstoffzellen-System kann vorrangig für die Bordstromversorgung in mobilen Einrichtungen, wie z.B. Reisemobilen, Caravans, Nutzfahrzeugen und Booten eingesetzt werden. Derartige mobile Einrichtungen weisen einen Nutzraum auf, wie z.B. eine Fahrerkabine, eine Kajüte oder den Wohnraum eines Caravans oder Reisemobils. Das Reformer-Brennstoffzellen-System ist jedoch nicht nur für mobile, sondern auch für stationäre Anwendungen konzipiert. Bevorzugte Leistungsgrößen reichen bis ca. 3 kW (elektrisch), besonders bevorzugt sind elektrische Leistungen zwischen 50 und 500 W. Als bevorzugte Brennstoffe dienen Propan bzw. Propan-Butan-Gemische, jedoch sind andere flüssige oder gasförmige Kohlenwasserstoff-Verbindungen (z.B. Diesel, Benzin, Methanol und Bio-Treibstoffe) bei entsprechender Brennstoffaufbereitung ebenfalls einsetzbar.

## Patentansprüche

1. Reformer-Brennstoffzellen-System, mit
- mehreren Komponenten, nämlich
+ mehreren, einen Reformer (1) zum Erzeugen eines wasserstoffreichen Gases aus einem Primärbrennstoff bildenden Reformerteilsystemen (2, 3, 4; 8, 9; 10-15), und
+ einer Niedertemperatur-Polymerelektrolytmembran-Brennstoffzelle (5) oder einer Hochtemperatur-Polymerelektrolytmembran-Brennstoffzelle (5) zum Erzeugen von elektrischem Strom unter Nutzung des wasserstoffreichen Gases; und mit
- einer außerhalb des Reformers (1) und der Brennstoffzelle (5) angeordneten Brennereinrichtung (6) zum Erzeugen eines heißen Abgases;
**dadurch gekennzeichnet, dass**
- eine Abgasführungseinrichtung (7) vorgesehen ist, zum Führen des Abgases zu wenigstens zwei der Komponenten, nämlich zu wenigstens einem der Reformerteilsysteme (2, 3, 4; 8, 9; 10-15) und zu der Brennstoffzelle (5); und dass
- durch die Abgasführungseinrichtung (7) der Strömungsweg des Abgases derart bestimmt ist, dass die Komponenten entsprechend ihres jeweiligen Betriebstemperatur-Niveaus in absinkender Temperatur-Reihenfolge nacheinander angeströmt und/oder durchströmt werden.

2. Reformer-Brennstoffzellen-Systemmit
- mehreren Komponenten, nämlich
+ mehreren, einen Reformer (1) zum Erzeugen eines wasserstoffreichen Gases aus einem Primärbrennstoff bildenden Reformerteilsystemen (2, 3, 4; 8, 9; 10-15), und
+ einer Niedertemperatur-Polymerelektrolytmembran-Brennstoffzelle (5) oder einer Hochtemperatur-Polymerelektrolytmembran-Brennstoffzelle (5) zum Erzeugen von elektrischem Strom unter Nutzung des wasserstoffreichen Gases; und mit
- einer außerhalb des Reformers (1) und der Brennstoffzelle (5) angeordneten Brennereinrichtung (6) zum Erzeugen eines heißen Abgases;
**dadurch gekennzeichnet, dass**
- eine Abgasführungseinrichtung (7) vorgesehen ist, zum Führen des Abgases zu wenigstens zwei der Komponenten, nämlich zu wenigstens einem der Reformerteilsysteme (2, 3, 4; 8, 9: 10-15) und zu der Brennstoffzelle (5);
- die Abgasführungseinrichtung (7) stromab von der Brennereinrichtung (6) und stromauf von den Komponenten in einen ersten Führungsabschnitt (16) und in einen zweiten Führungsabschnitt (17) geteilt ist;
- durch den ersten Führungsabschnitt (16) Abgas zu mehreren Reformerteilsystemen (2, 3, 4; 8. 9: 10-15) geführt wird:
- durch die Abgasführungseinrichtung (7) der Strömungsweg des Abgases derart bestimmt ist, dass wenigstens ein Teil der betreffenden Reformerteilsysteme (2, 3, 4; 8, 9; 10-15) entsprechend ihres jeweiligen Betriebstemperatur-Niveaus in absinkender Temperatur-Reihenfolge nacheinander angeströmt und/oder durchströmt werden: und dass
- durch den zweiten Führungsabschnitt (17) Abgas zu der Brennstoffzelle (5) geführt wird.

3. Reformer-Brennstoffzellen-System nach Anspruch 1 oder 2, **dadurch gekennzeichnet, dass** die Abgasführungseinrichtung derart ausgestaltet ist, dass die Komponenten durch das Abgas von außen angeströmt werden und die Wärme des Abgases von außen über Wände in Reaktionsräume der Komponenten übertragen wird.

4. Reformer-Brennstoffzellen-System nach einem der Ansprüche 1 bis 3, **dadurch gekennzeichnet, dass** die Abgasführungseinrichtung Kanäle zum Führen des Abgases aufweist.

5. Reformer-Brennstoffzellen-System nach Anspruch 4, **dadurch gekennzeichnet, dass** die Kanäle in Reaktionsräumen der Komponenten angeordnet sind.

6. Reformer-Brennstoffzellen-System nach einem der Ansprüche 1 bis 5, **dadurch gekennzeichnet, dass** entsprechend dem Wärmebedarf einer jeweiligen Komponente, der von der zum Erreichen der Betriebstemperatur in der Komponente erforderlichen Wärme abhängig ist, die für einen Wärmeübergang vom Abgas in den jeweiligen Reaktionsraum wirksame Oberfläche der Kanäle angepasst ist.

7. Reformer-Brennstoffzellen-System nach einem der Ansprüche 4 bis 6, **dadurch gekennzeichnet, dass** die Länge, Anzahl, Querschnittsform und/oder Querschnittsabmessung eines einer Komponente zugeordneten Kanals an den Wärmebedarf der Komponente angepasst ist.

8. Reformer-Brennstoffzellen-System nach einem der Ansprüche 1 bis 7, **dadurch gekennzeichnet, dass** Heizkanäle in den Komponenten vorgesehen sind, die gleichermaßen von dem von der Abgasführungseinrichtung zugeführten Abgas und von einem beim Betrieb des Systems in den Komponenten selbst erzeugten heißen Gas durchströmbar sind.

9. Reformer-Brennstoffzellen-System nach einem der Ansprüche 1 bis 8, **dadurch gekennzeichnet, dass** die Abgasführungseinrichtung (7) eine serielle Durchströmung von wenigstens einem Teil der Komponenten ermöglicht.

10. Reformer-Brennstoffzellen-System nach einem der Ansprüche 1 bis 9, **dadurch gekennzeichnet, dass** die Abgasführungseinrichtung (7) eine parallele Durchströmung von wenigstens einem Teil der Reformerteilsysteme ermöglicht.

11. Reformer-Brennstoffzellen-System nach einem der Ansprüche 1 bis 10, **dadurch gekennzeichnet, dass** wenigstens einer der Komponenten Zusatzluft (18) zugeführt wird.

12. Reformer-Brennstoffzellen-System nach Anspruch 11, **dadurch gekennzeichnet, dass** dem Abgas in dem zweiten Führungsabschnitt (17) Zusatzluft (18) beigemischt wird.

13. Reformer-Brennstoffzellen-System nach Anspruch 11 oder 12, **dadurch gekennzeichnet, dass** durch den zweiten Führungsabschnitt (17) Abgas zu einem Wärmetauscher geführt wird, durch den Zusatzluft (18) erwärmt wird, die der Brennstoffzelle (5) zugeführt wird.

14. Reformer-Brennstoffzellen-System nach einem der Ansprüche 11 bis 13, **dadurch gekennzeichnet, dass** die Zusatzluft (18) von einer Primärluft abgezweigt wird, die der Brennereinrichtung (6) zugeführt wird.

15. Reformer-Brennstoffzellen-System nach einem der Ansprüche 11 bis 14, **dadurch gekennzeichnet, dass** die Zusatzluft (18) von einer Zusatzluft-Fördereinrichtung (19) zwangsweise gefördert wird.

16. Reformer-Brennstoffzellen-System nach Anspruch 15, **dadurch gekennzeichnet, dass** die Zusatzluft-Fördereinrichtung (19) unabhängig von einem Betriebszustand der Brennereinrichtung (6) aktiviert wird.

17. Reformer-Brennstoffzellen-System nach einem der Ansprüche 1 bis 16, **dadurch gekennzeichnet, dass** diejenigen Komponenten benachbart zueinander angeordnet sind, die eine möglichst ähnliche Betriebstemperatur erfordern.

18. Reformer-Brennstoffzellen-System nach einem der Ansprüche 1 bis 17, **dadurch gekennzeichnet, dass** die Komponenten in Abhängigkeit von ihrer jeweiligen Betriebstemperatur nebeneinander und/oder nacheinander mit absinkender Temperatur-Reihenfolge angeordnet sind.

19. Reformer-Brennstoffzellen-System nach einem der Ansprüche 1 bis 18, **dadurch gekennzeichnet, dass** die Reformerteilsysteme Komponenten sind, ausgewählt aus der Gruppe Reformereinrichtung (10). Verdampfer (13), eine oder mehrere Shiftstufen (14), eine oder mehrere Gasfeinreinigungsstufen (15) und/oder ein oder mehrere Wärmtauscher (11, 12).

20. Reformer-Brennstoffzellen-System nach einem der Ansprüche 1 bis 19, **dadurch gekennzeichnet, dass** zwischen benachbarten Komponenten eine Wärmeisolierung vorgesehen ist.

21. Reformer-Brennstoffzellen-System nach einem der Ansprüche 1 bis 20, **dadurch gekennzeichnet, dass** wenigstens zwei der Komponenten eine bauliche Einheit bilden.

22. Reformer-Brennstoffzellen-System nach einem der Ansprüche 1 bis 21, **dadurch gekennzeichnet, dass** wenigstens zwei der zueinander benachbarten Komponenten räumlich getrennt voneinander angeordnet sind.

23. Reformer-Brennstoffzellen-System nach einem der Ansprüche 1 bis 22, **dadurch gekennzeichnet, dass** die Brennereinrichtung (6) mit dem Primärbrennstoff betrieben wird.

24. Reformer-Brennstoffzellen-System nach einem der Ansprüche 1 bis 23, **dadurch gekennzeichnet, dass**
- der Brennereinrichtung (6) Primärluft zum Verbrennen des Primärbrennstoffs und Erzeugen des Abgases zugeführt wird;
- dem Abgas Sekundärluft zugeführt wird.

25. Reformer-Brennstoffzellen-System nach Anspruch 24, **dadurch gekennzeichnet, dass** die Sekundärluft durch eine Sekundärluft-Förderungseinrichtung zwangsweise zugeführt wird.

26. Reformer-Brennstoffzellen-System nach einem der Ansprüche 1 bis 25, **dadurch gekennzeichnet, dass** die Brennereinrichtung (6) mit Luftstöchiometrien von X = 1.0 bis 4,0, bevorzugt = 1,2 bis 3,0, betrieben wird.

27. Reformer-Brennstoffzellen-System nach Anspruch 26, **dadurch gekennzeichnet, dass** die Luftstöchiometrie und/oder die Wärmeleistung der Brennereinrichtung (6) in Abhängigkeit von der Betriebstemperatur von derjenigen Komponente festgelegt ist, die den höchsten Betriebstemperaturwert aufweist.

28. Reformer-Brennstoffzellen-System nach einem der Ansprüche 1 bis 27, **dadurch gekennzeichnet, dass** eine Luftversorgungseinrichtung zum Zuführen von Verbrennungsluft zu der Brennereinrichtung (6) vorgesehen ist, und dass die Luftversorgungseinrichtung außerdem zum Fördern des Abgases durch die Abgasführungseinrichtung dient.

29. Reformer-Brennstoffzellen-System nach einem der Ansprüche 1 bis 28, **dadurch gekennzeichnet, dass**
- die Brennereinrichtung (6) Bestandteil einer Heizungseinrichtung zum Erzeugen von Wärme für einen Nutzraum ist; und dass
- das Abgas von der Brennereinrichtung (6) nach Verlassen des Reformer-Brennstoffzellen-Systems zum Beheizen des Nutzraums verwendet wird.

30. Reformer-Brennstoffzellen-System nach Anspruch 29, **dadurch gekennzeichnet dass** dem Reformer-Brennstoffzellen-System im Abgasstrom ein Wärmetauscher zum Erwärmen von Luft für den Nutzraum nachgeschaltet ist.

31. Verfahren zum Starten und/oder Betreiben eines Reformer-Brennstoffzellen-Systems, wobei das Reformer-Brennstoffzellen-System aufweist:
- mehrere Komponenten, nämlich
+ mehrere, einen Reformer (1) zum Erzeugen eines wasserstoffreichen Gases aus einem Primärbrennstoff bildende Reformerteilsysteme (2, 3, 4; 8, 9; 10-15), und
+ eine Niedertemperatur-Polymerelektrolytmembran-Brennstoffzelle (5) oder eine Hochtemperatur-Polymerelektrolytmembran-Brennstoffzelle (5) zum Erzeugen von elektrischem Strom unter Nutzung des wasserstoffreichen Gases; sowie
- eine außerhalb des Reformers (1) und der Brennstoffzelle (5) angeordnete Brennereinrichtung (6) zum Erzeugen eines heißen Abgases;
**dadurch gekennzeichnet, dass**
- das Abgas zu wenigstens zwei Komponenten, nämlich zu wenigstens einem der Reformerteilsysteme (2, 3, 4; 8, 9; 10-15) und zu der Brennstoffzelle (5) geführt wird; und dass
- das Abgas die betreffenden Komponenten entsprechend ihres jeweiligen Betriebstemperatur-Niveaus in absinkender Reihenfolge nacheinander an- und/oder durchströmt.

## Claims

1. Reformer fuel cell system, comprising
- plural components, namely
+ plural reformer partial systems (2, 3, 4; 8, 9; 10-15) forming a reformer (1) for generating a hydrogen-rich gas from a primary fuel, and
+ a low-temperature polymer electrolyte membrane fuel cell (5) or a high-temperature polymer electrolyte membrane fuel cell (5) for generating electric current by use of the hydrogen-rich gas;
and comprising
- a burner device (6) that is arranged outside of the reformer (1) and of the fuel cell (5) for generating a hot exhaust gas;
**characterized in**
- **that** an exhaust gas guiding means (7) is provided for guiding the exhaust gas to at least two of the components, that is to at least one of the reformer partial systems (2, 3, 4; 8, 9; 10-15) and to the fuel cell (5); and
- **that** by means of the exhaust gas guiding means (7) the flow path of the exhaust gas is determined such that the components are successively flown against and/or flown through by the exhaust gas according to their respective operating temperature level in descending temperature order.

2. Reformer fuel cell system, comprising
- plural components, namely
+ plural reformer partial systems (2, 3, 4; 8, 9; 10-15) forming a reformer (1) for generating a hydrogen-rich gas from a primary fuel, and
+ a low-temperature polymer electrolyte membrane fuel cell (5) or a high-temperature polymer electrolyte membrane fuel cell (5) for generating electric current by use of the hydrogen-rich gas;
and comprising
- a burner device (6) that is arranged outside of the reformer (1) and of the fuel cell (5) for generating a hot exhaust gas;
**characterized in**
- **that** an exhaust gas guiding means (7) is provided for guiding the exhaust gas to at least two of the components, that is to at least one of the reformer partial systems (2, 3, 4; 8, 9; 10-15) and to the fuel cell (5);
- **that** downstream of the burner device (6) and upstream of the components the exhaust gas guiding means (7) is divided into a first guide section (16) and into a second guide section (17),
- **that** through the first guide section (16) exhaust gas is guided to plural reformer partial systems (2, 3, 4; 8, 9; 10-15)
- **that** by means of the exhaust gas guiding means (7) the flow path of the exhaust gas is determined such that at least a part of the respective reformer partial systems (2, 3, 4; 8, 9; 10-15) are successively flown against and/or flown through by the exhaust gas according to their respective operating temperature level in descending temperature order, and
- **that** through the second guide section (17) exhaust gas is guided to the fuel cell (5).

3. Reformer fuel cell system according to claim 1 or 2,
**characterized in**
**that** the exhaust gas guiding means is designed such that the components are flown against from the outside by the exhaust gas and that the heat of the exhaust gas can be transferred from the outside via walls into reaction chambers of the components.

4. Reformer fuel cell system according to any one of claims 1 to 3,
**characterized in**
**that** the exhaust gas guiding means comprises ducts for guiding the exhaust gas.

5. Reformer fuel cell system according to claim 4,
**characterized in**
**that** the ducts are arranged in reaction chambers of the components.

6. Reformer fuel cell system according to any one of claims 1 to 5,
**characterized in**
**that** the surface of the ducts that is effective for a transfer of heat from the exhaust gas into the respective reaction chamber is adjusted according to the heat requirements of a respective component that are depending on the heat required for reaching the operating temperature in said component.

7. Reformer fuel cell system according to any one of claims 4 to 6,
**characterized in**
**that** the length, number, cross-sectional shape and/or cross-sectional dimensions of a duct assigned to a component are adjusted to the heat requirement of said component.

8. Reformer fuel cell system according to any one of claims 1 to 7,
**characterized in**
**that** heating ducts are provided in the components, which can likewise be flown through by the exhaust gas supplied by the exhaust gas guiding means and by a hot gas generated in the components themselves during operation of the system.

9. Reformer fuel cell system according to any one of claims 1 to 8,
**characterized in**
**that** the exhaust gas guiding means (7) allows a serial flow through of at least a part of the components.

10. Reformer fuel cell system according to any one of the claims 1 to 9,
**characterized in**
**that** the exhaust gas guiding means (7) allows a parallel flow through of at least a part of the reformer partial systems.

11. Reformer fuel cell system according to any one of the claims 1 to 10,
**characterized in**
**that** at least one of the components is supplied with additional air (18).

12. Reformer fuel cell system according to claims 11,
**characterized in**
**that** the exhaust gas is admixed with additional air (18) in the second guiding section (17).

13. Reformer fuel cell system according to claim 11 or 12,
**characterized in**
**that** exhaust gas is guided through the second guiding section (17) to a heat exchanger, by means of which additional air (18) is heated, which is supplied to the fuel cell (5).

14. Reformer fuel cell system according to any one of claims 11 to 13,
**characterized in**
**that** the additional air (18) is branched off a primary air which is supplied to the burner device (6).

15. Reformer fuel cell system according to any one of claims 11 to 14,
**characterized in**
**that** the additional air (18) is delivered by a additional air delivery means (19) in a forced manner.

16. Reformer fuel cell system according to claim 15,
**characterized in**
**that** the additional air delivery means (19) is activated independently of an operating state of the burner device (6).

17. Reformer fuel cell system according to any one of claims 1 to 16,
**characterized in**
**that** those of the components that require an operating temperature as similar as possible are arranged adjacent to each other.

18. Reformer fuel cell system according to any one of claims 1 to 17,
**characterized in**
**that**, in dependence of their respective operating temperature, the components are arranged side by side and/or successively in descending temperature order.

19. Reformer fuel cell system according to any one of claims 1 to 18,
**characterized in**
**that** the reformer partial systems are components selected from the group comprising a reformer device (10), a vaporizer (13), one or plural shift stages (14), one or plural gas fine-cleaning stages (15), and/or one or plural heat exchangers (11, 12).

20. Reformer fuel cell system according to any one of claims 1 to 19,
**characterized in**
**that** a thermal insulation is provided between adjacent components.

21. Reformer fuel cell system according to any one of claims 1 to 20,
**characterized in**
**that** at least two of the components form a structural unit.

22. Reformer fuel cell system according to any one of claims 1 to 21,
**characterized in**
**that** at least two of the components adjacent each other are arranged spatially separated from each other.

23. Reformer fuel cell system according to any one of claims 1 to 22,
**characterized in**
**that** the burner device (6) is operated with the primary fuel.

24. Reformer fuel cell system according to any one of claims 1 to 23,
**characterized in**
- **that** the burner device (6) is supplied with primary air for burning the primary fuel and for generating the exhaust gas,
- **that** the exhaust gas is supplied with secondary air.

25. Reformer fuel cell system according to claim 24,
**characterized in**
**that** the secondary air is supplied through a secondary air delivery means in a forced manner.

26. Reformer fuel cell system according to any one of claims 1 to 28,
**characterized in**
**that** the burner device (6) is operated with air stoichiometries ranging from λ = 1,0 to 4,0, preferably from λ = 1,2 to 3,0.

27. Reformer fuel cell system according to claim 26,
**characterized in**
**that** the air stoichiometry and/or the heat output of the burner device (6) is determined in dependence of the operating temperature of that component having the highest operating temperature value.

28. Reformer fuel cell system according to any one of claims 1 to 27,
**characterized in**
**that** an air supply means is provided for supplying combustion air to the burner device (6) and
**that** the air supply means also serves for delivering the exhaust gas through the exhaust gas guiding means.

29. Reformer fuel cell system according to any one of claims 1 to 28,
**characterized in**
- **that** the burner device (6) is a part of a heating device for generating heat for a usable space, and,
- **that** after having left the reformer fuel cell system, the exhaust gas of the burner device (6) is used for heating the usable space.

30. Reformer fuel cell system according to claim 29,
**characterized in**
**that** a heat exchanger for heating air for the usable space is arranged in the exhaust gas flow downstream of the reformer fuel cell system.

31. Method for starting and/or operating a reformer fuel cell system wherein the reformer fuel cell system comprises
- plural components, namely
+ plural reformer partial systems (2, 3, 4; 8, 9; 10-15) forming a reformer (1) for generating a hydrogen-rich gas from a primary fuel, and
+ a low-temperature polymer electrolyte membrane fuel cell (5) or a high-temperature polymer electrolyte membrane fuel cell (5) for generating electric current by use of the hydrogen-rich gas;
and
- a burner device (6) that is arranged outside of the reformer (1) and of the fuel cell (5) for generating a hot exhaust gas;
**characterized in**
- **that** the exhaust gas is supplied to at least two of the components, namely to at least one of the reformer partial systems (2, 3, 4; 8, 9; 10-15) and to the fuel cell (5); and
- **that** the exhaust gas flows successively against and/or flows through the respective components according to their respective operating temperature level in descending order.

## Revendications

1. Système reformeur-pile à combustible, avec
- plusieurs éléments, à savoir
+ plusieurs sous-systèmes de reformeur (2, 3, 4 ; 8, 9 ; 10-15) qui forment un reformeur (1) pour produire à partir d'un combustible primaire un gaz riche en hydrogène, et
+ une pile à combustible à membrane électrolyte polymère basse température (5) ou une pile à combustible à membrane électrolyte polymère haute température (5) pour produire un courant électrique en utilisant le gaz riche en hydrogène ;
et avec
- un dispositif brûleur (6) qui est disposé à l'extérieur du reformeur (1) et de la pile à combustible (5) et qui est destiné à produire des gaz d'échappement chauds ;
**caractérisé**
- **en ce qu'**il est prévu un dispositif de guidage des gaz d'échappement (7) pour amener les gaz d'échappement dans au moins deux des éléments, à savoir dans l'un au moins des sous-systèmes de reformeur (2, 3, 4 ; 8, 9 ; 10-15) et dans la pile à combustible (5) ;
- et **en ce que** le dispositif de guidage des gaz d'échappement (7) définit la trajectoire d'écoulement des gaz d'échappement de telle sorte que les gaz d'échappement passent sur les éléments et/ou traversent ceux-ci successivement à une température de plus en plus faible suivant leur niveau respectif de température de service.

2. Système reformeur-pile à combustible, avec
- plusieurs éléments, à savoir
+ plusieurs sous-systèmes de reformeur (2, 3, 4 ; 8, 9 ; 10-15) qui forment un reformeur (1) pour produire à partir d'un combustible primaire un gaz riche en hydrogène, et
+ une pile à combustible à membrane électrolyte polymère basse température (5) ou une pile à combustible à membrane électrolyte haute température (5) pour produire un courant électrique en utilisant le gaz riche en hydrogène ; et avec
- un dispositif brûleur (6) qui est disposé à l'extérieur du reformeur (1) et de la pile à combustible (5) et qui est destiné à produire des gaz d'échappement chauds ;
**caractérisé**
- **en ce qu'**il est prévu un dispositif de guidage des gaz d'échappement (7) pour amener les gaz d'échappement dans au moins deux des éléments, à savoir dans l'un au moins des sous-systèmes de reformeur (2, 3, 4 ; 8, 9 ; 10-15) et dans la pile à combustible (5) ;
- **en ce que** le dispositif de guidage des gaz d'échappement (7), en aval du dispositif brûleur (6) et en amont des éléments, est divisé en une première section de guidage (16) et une seconde section de guidage (17) ;
- **en ce que** la première section de guidage (16) amène les gaz d'échappement dans plusieurs sous-systèmes de reformeur (2, 3, 4 ; 8, 9 ; 10-15) ;
- **en ce que** le dispositif de guidage des gaz d'échappement (7) définit la trajectoire d'écoulement des gaz d'échappement de telle sorte que les gaz d'échappement passent sur une partie au moins des sous-systèmes de reformeur (2, 3, 4 ; 8, 9 ; 10-15) concernés et/ou traversent ceux-ci successivement à une température de plus en plus faible suivant leur niveau respectif de température de service ;
- et **en ce que** la seconde section de guidage (17) amène les gaz d'échappement dans la pile à combustible (5).

3. Système reformeur-pile à combustible selon la revendication 1 ou 2, **caractérisé en ce que** le dispositif de guidage des gaz d'échappement est conçu pour que les gaz d'échappement passent sur l'extérieur des éléments et que la chaleur de ces gaz d'échappement soit transmise de l'extérieur aux espaces de réaction des éléments, par l'intermédiaire des parois.

4. Système reformeur-pile à combustible selon l'une des revendications 1 à 3, **caractérisé en ce que** le dispositif de guidage des gaz d'échappement comporte des conduits pour le passage des gaz d'échappement.

5. Système reformeur-pile à combustible selon la revendication 4, **caractérisé en ce que** les conduits sont disposés dans des espaces de réaction des éléments.

6. Système reformeur-pile à combustible selon l'une des revendications 1 à 5, **caractérisé en ce que** suivant les besoins en chaleur de chaque élément, qui sont fonction de la chaleur nécessaire pour atteindre la température de service dans l'élément, la surface des conduits qui est active pour un transfert de chaleur des gaz d'échappement vers l'espace de réaction respectif est adaptée.

7. Système reformeur-pile à combustible selon l'une des revendications 4 à 6, **caractérisé en ce que** la longueur, le nombre, la forme de section transversale et/ou les dimensions en section transversale d'un conduit associé à un élément sont adaptés aux besoins en chaleur de l'élément.

8. Système reformeur-pile à combustible selon l'une des revendications 1 à 7, **caractérisé en ce qu'**il est prévu, dans les éléments, des conduits chauffants qui sont aptes à être traversés de la même manière par les gaz d'échappement amenés par le dispositif de guidage des gaz d'échappement et par un gaz chaud produit lors du fonctionnement du système dans les éléments eux-mêmes.

9. Système reformeur-pile à combustible selon l'une des revendications 1 à 8, **caractérisé en ce que** le dispositif de guidage des gaz d'échappement (7) permet de traverser en série une partie au moins des éléments.

10. Système reformeur-pile à combustible selon l'une des revendications 1 à 9, **caractérisé en ce que** le dispositif de guidage des gaz d'échappement (7) permet de traverser parallèlement une partie au moins des sous-systèmes de reformeur.

11. Système reformeur-pile à combustible selon l'une des revendications 1 à 10, **caractérisé en ce que** de l'air supplémentaire (18) est amené dans l'un au moins des éléments.

12. Système reformeur-pile à combustible selon la revendication 11, **caractérisé en ce que** de l'air supplémentaire (18) est mélangé aux gaz d'échappement dans la seconde section de guidage (17).

13. Système reformeur-pile à combustible selon la revendication 11 ou 12, **caractérisé en ce que** la seconde section de guidage (17) amène les gaz d'échappement dans un échangeur de chaleur grâce auquel est chauffé l'air supplémentaire (18) amené dans la pile à combustible (5).

14. Système reformeur-pile à combustible selon l'une des revendications 11 à 13, **caractérisé en ce que** l'air supplémentaire (18) est dérivé d'un air primaire qui est amené dans le dispositif brûleur (6).

15. Système reformeur-pile à combustible selon l'une des revendications 11 à 14, **caractérisé en ce que** l'air supplémentaire (18) est refoulé de manière forcée par un dispositif de refoulement d'air supplémentaire (19).

16. Système reformeur-pile à combustible selon la revendication 15, **caractérisé en ce que** le dispositif de refoulement d'air supplémentaire (19) est activé indépendamment d'un état de fonctionnement du dispositif brûleur (6).

17. Système reformeur-pile à combustible selon l'une des revendications 1 à 16, **caractérisé en ce que** les éléments qui nécessitent des températures de service aussi proches que possible sont disposés les uns auprès des autres.

18. Système reformeur-pile à combustible selon l'une des revendications 1 à 17, **caractérisé en ce que** les éléments, en fonction de leur température de service respective, sont disposés côte à côte et/ou successivement avec une température de plus en plus faible.

19. Système reformeur-pile à combustible selon l'une des revendications 1 à 18, **caractérisé en ce que** les sous-systèmes de reformeur sont constitués par des éléments choisis dans le groupe constitué par le dispositif reformeur (10), l'évaporateur (13), un ou plusieurs étages de conversion (14), un ou plusieurs étages d'épuration fine des gaz (15) et/ou un ou plusieurs échangeurs de chaleur (11, 12).

20. Système reformeur-pile à combustible selon l'une des revendications 1 à 19, **caractérisé en ce qu'**il est prévu entre des éléments voisins une isolation thermique.

21. Système reformeur-pile à combustible selon l'une des revendications 1 à 20, **caractérisé en ce qu'**au moins deux des éléments forment une unité de construction.

22. Système reformeur-pile à combustible selon l'une des revendications 1 à 21, **caractérisé en ce qu'**au moins deux des éléments voisins sont séparés dans l'espace.

23. Système reformeur-pile à combustible selon l'une des revendications 1 à 22, **caractérisé en ce que** le dispositif brûleur (6) fonctionne avec le combustible primaire.

24. Système reformeur-pile à combustible selon l'une des revendications 1 à 23, **caractérisé**
- **en ce que** de l'air primaire est amené dans le dispositif brûleur (6) pour brûler le combustible primaire et pour produire les gaz d'échappemment ;
- et **en ce que** l'air secondaire est amené dans les gaz d'échappement.

25. Système reformeur-pile à combustible selon la revendication 24, **caractérisé en ce que** l'air secondaire est amené de manière forcée par un dispositif de refoulement d'air secondaire.

26. Système reformeur-pile à combustible selon l'une des revendications 1 à 25, **caractérisé en ce que** le dispositif brûleur (6) fonctionne avec des stoechiométries de l'air λ=1,0 à 4,0, de préférence λ=1,2 à 3,0.

27. Système reformeur-pile à combustible selon la revendication 26, **caractérisé en ce que** la stoechiométrie de l'air et/ou la puissance thermique du dispositif brûleur (6) sont fixées en fonction de la température de service des éléments qui présentent la plus grande valeur de température de service.

28. Système reformeur-pile à combustible selon l'une des revendications 1 à 27, **caractérisé en ce qu'**il est prévu un dispositif d'alimentation en air pour amener de l'air de combustion dans le dispositif brûleur (6), et **en ce que** le dispositif d'alimentation en air sert par ailleurs au refoulement des gaz d'échappement par le dispositif de guidage des gaz d'échappement.

29. Système reformeur-pile à combustible selon l'une des revendications 1 à 28, **caractérisé**
- **en ce que** le dispositif brûleur (6) fait partie d'un dispositif de chauffage destiné à produire de la chaleur pour un espace utile ;
- et **en ce que** les gaz d'échappement du dispositif brûleur (6) sont utilisés, après être sortis du système reformeur-pile à combustible, pour chauffer l'espace utile.

30. Système reformeur-pile à combustible selon la revendication 29, **caractérisé en ce qu'**il est prévu, en aval du système reformeur-pile à combustible dans le courant des gaz d'échappement, un échangeur de chaleur pour chauffer l'air pour l'espace utile.

31. Procédé pour démarrer/ou faire fonctionner un système reformeur-pile à combustible, ledit système reformeur-pile à combustible comportant :
- plusieurs éléments, à savoir
+ plusieurs sous-systèmes de reformeur (2, 3, 4 ; 8, 9 ; 10-15) qui forment un reformeur (1) pour produire à partir d'un combustible primaire un gaz riche en hydrogène, et
+ une pile à combustible à membrane électrolyte polymère basse température (5) ou une pile à combustible à membrane électrolyte polymère haute température (5) pour produire un courant électrique en utilisant le gaz riche en hydrogène ;
- et un dispositif brûleur (6) qui est disposé à l'extérieur du reformeur (1) et de la pile à combustible (5) et qui est destiné à produire des gaz d'échappement chaud ;
**caractérisé**
- **en ce que** les gaz d'échappement sont amenés dans au moins deux éléments, à savoir dans l'un au moins des sous-systèmes de reformeur (2, 3, 4 ; 8, 9 ; 10-15) et dans la pile à combustible (5) ;
- et **en ce que** les gaz d'échappement passent sur les éléments concernés et/ou traversent ceux-ci successivement à une température de plus en plus faible suivant leur niveau respectif de température de service.
